# EUROPÄISCHE PATENTSCHRIFT

(11) **EP 2 401 044 B1**
(45) Veröffentlichungstag und Bekanntmachung des Hinweises auf die Patenterteilung: **13.02.2013**
(21) Anmeldenummer: 10730349.7
(22) Anmeldetag: 02.02.2010
(51) Int. Cl.: A63H 30/04, A63H 27/133

(54) **MODELLFLUGKÖRPERSTEUER- UND EMPFANGSEINRICHTUNG**
MODEL AIRCRAFT CONTROL AND RECEIVING DEVICE
DISPOSITIF DE COMMANDE ET DE RÉCEPTION DE MODÈLE RÉDUIT D'AÉRONEF

(30) Priorität: 04.02.2009 DE 202009001355 U
(43) Veröffentlichungstag der Anmeldung: 04.01.2012
(73) Patentinhaber: Röhr, Ulrich, 63452 Hanau (DE); Mikado Model Helicopters GmbH, 14469 Potsdam (DE)
(72) Erfinder: RÖHR, Ulrich, 63452 Hanau (DE)
(86) Internationale Anmeldenummer: PCT/EP2010/000596
(87) Internationale Veröffentlichungsnummer: WO 2010/089072

(56) Entgegenhaltungen:
- DE-A1- 3 437 297
- DE-U1- 29 805 401
- DE-U1- 29 810 356
- US-A1- 2004 245 378

## Beschreibung

Die Erfindung betrifft eine Modellflugkörpersteuer- und Empfangseinrichtung gemäß Anspruch 1.

Es sind bereits elektronische Fluglagenregler für die Stabilisierung von Helikopterflugmodellen bekannt geworden. Ein Helikopterfluglagenregler für den Rotor umfasst vorzugsweise eine Regeleinrichtung zur Fluglagenregelung zumindest der Längsachse (Achse in Flugrichtung, also "Roll") und der Querachse (Achse horizontal und quer zur Flugrichtung, also "Nick"). Mit der Längs- und Querachsenregelung wird somit die Lage des Rotors des Helikopters geregelt bzw. hierdurch stabilisiert. Bekanntlich erfolgt dabei eine Regelung der Fluglage über die geregelte Ansteuerung der Servos der Taumelscheibe des Helikopters. Vorteilhafterweise kann jetzt auf Grund der erst kürzlich erfolgten Entwicklung von Helikopterfluglagenreglern eine ausschließlich elektronisch geregelte Taumelscheibenansteuerung erfolgen, so dass auf eine bisher im Stand der Technik übliche, traditionelle mechanische Stabilisierung (Bell/Hiller-Ansteuerung, sogenannte Paddelstange) im Bereich des Rotorkopfs nun vollständig verzichtet werden.

Der an sich bekannte Helikopterfluglagenregler umfasst außerdem Steuereingänge für Steuerkommandos eines Funksenders (RC-Fernsteuersender), die in der Fluglagenregelung verarbeitet werden und mit denen das Flugmodell gesteuert wird. Diese Steuereingänge sind bei bisher bekannten Helikopterfluglagenreglern über separate, mehrkanalige Steuerausgänge (jedem Steuerkanal ist ein eigenes Kabel und ein eigener Stecker zugeordnet) mit den Kanalausgängen eines RC-Funkempfängers verbunden. Jedem Kanal ist eine Steuerfunktion für den Helikopter zugeordnet, beispielsweise Kanal 1: Nick, Kanal 2: Roll, Kanal 3: Pitch, Kanal 4: Motordrehzahl, Kanal 5: Heckrotor und Kanal 6: Bankumschaltung. Die Zuordnung der Kanäle zu den einzelnen Steuerfunktionen variiert typischerweise zwischen den Herstellern von RC-Fernsteueranlagen oder Helikoptermodellen.

Ein herkömmlicher Funkempfänger weist in der Regel eine oder mehrere Empfangsantennen zum Empfang der gesendeten Steuerkanäle auf, die von einem Fernsteuersender gesendet werden. Der Fernsteuersender weist in der Regel zwei Steuerknüppel auf, so dass jeder Knüppelbewegungsrichtung ein Steuerkanal zugeordnet ist. Bei zwei Knüppeln, die in X- und Y-Richtung bewegbar sind, ergeben sich dann vier Steuerkanäle. Der herkömmliche Funkempfänger ist in der Regel aus einem Empfangsmodul (HF-Teil) und einer Schaltung zusammengesetzt, die unter anderem die Funktion hat, die Kanäle auf mindestens eine der Anzahl der Steuerkanäle entsprechende Anzahl von Buchsen aufzuteilen. Dieser Teil der Schaltung wird nachfolgend Empfangseinrichtung bezeichnet.

Nachteil obiger an sich bekannter Helikopterfluglagenregler-Systeme ist, dass sich besonders in kleinen Helikoptermodellen die verschiedenen Gehäuse für die Sensoren und den Funkempfänger einschließlich der zahlreichen Kanal-Verbindungskabel vom Empfänger zum Helikopterfluglagenregler-Gehäuse nur schwer unterbringen lassen.

Aus der US 2004/245378 A1 geht ein Verfahren hervor, mit dem eine autonome Steuerung eines unbemannten Helikopters ermöglicht wird. Der unbemannte Helikopter umfasst eine Kontrolleinheit mit einem Fluglagenregler, einen Mischer, einen Funkempfänger und Servos zur Kontrolle des Helikopters. Mit Hilfe eines GPS-Empfängers kann der Helikopter an eine vorgegebene Position gesteuert werden. Da die notwendigen Komponenten separat vorliegen, ist der Platzbedarf dieser Komponenten vergleichsweise hoch.

Eine Aufgabe der vorliegenden Erfindung besteht nun darin, den Platzbedarf und damit den Aufbauaufwand bestehender Helikopterfluglagenregler-Systeme zu verringern und dabei den Funktionsumfang einhergehend mit einer verbesserten Regelung zu erweitern.

Diese Aufgabe wird erfindungsgemäß gelöst durch die Modellflugkörpersteuer- und Empfangseinrichtung gemäß Anspruch 1.

Die Erfindung betrifft zum einen eine Modellflugkörpersteuer- und Empfangseinrichtung in einem Gehäuse umfassend einen elektronischen, kreiselbasierten mehrachsigen programmierbaren Fluglagenregler, insbesondere Helikopterfluglagenregler, welcher Steuereingänge für mehrere Steuerkanäle sowie Eingänge für Kreiselsignale umfasst sowie eine Empfangseinrichtung, welcher die Steuerkanäle von einem oder mehreren Empfangsmodulen (z.B. Satellitenempfänger) zugeführt werden. Die Modellflugkörpersteüer- und Empfangseinrichtung umfasst daher zumindest einen Eingang für ein Empfangsmodul. Das oder die Empfangsmodul(e) kann innerhalb und/oder außerhalb des Gehäuses des Fluglagenreglers angeordnet sein. Der Eingang für das/die Empfangsmodule bzw. die daran angeschlossene Empfangseinrichtung verarbeitet die Kanäle für die Steuerung des Helikopters sowie ggf. zusätzliche vom Nutzer benötigte weitere Kanäle. Zumindest ein Teil der eingehenden Kanalsignale wird dann in dem im Gehäuse untergebrachten Fluglagenregler (z.B. in einem Mikrocontroller) ausgewertet und verarbeitet.

Gemäß einer bevorzugten Ausführungsform der Erfindung enthält die Modellflugkörpersteuer- und Empfangseinrichtung im selben Gehäuse neben dem Fluglagenregler auch zumindest ein Empfangsmodul, welches die einzelnen für die Steuerung notwendigen Kanäle sowie zusätzlich ggf. weitere nutzerabhängige Kanäle empfängt (beispielsweise drahtlos über ein Funksignal). Bevorzugt weist das Empfangsmodul daher mindestens eine Antenne auf. Das Empfangsmodul ist so eingerichtet, dass dieses die Steuersignale empfängt und an den Fluglagenregler codiert weiterleitet. Im Falle des integrierten Empfangsmoduls ist dann vorzugsweise die Antenne dem Gehäuse der Modellflugsteuer- und Empfangseinrichtung zugeordnet.

Die Modellflugkörpersteuer- und Empfangseinrichtung umfasst außerdem zumindest einen Fluglagenregler sowie vorzugsweise zumindest einen Mikroprozessor zur Verarbeitung der Eingangsdaten. Weiterhin sind ein oder mehrere Ausgang vorgesehen, die zur Ansteuerung einer oder mehrerer mechanischer Ansteuervorrichtungen für die Steuerung des Helikopters dienen (z.B. RC-Servos, die auf die Taumelscheibe des Helikopters wirken).

Vorzugsweise ist der Eingang der Empfangseinrichtung durch eine elektrische Leitungsverbindung mit einer verringerten Anzahl von Einzeladern gebildet, wobei mehrere Steuerkanäle auf einer oder mehreren Signalleitungen zusammengefasst sind.

Besonders bevorzugt umfasst die Modellflugkörpersteuer- und Empfangseinrichtung einen einzelnen, zusammengefassten Kanal-Anschluss, mit dem diese mit einer Empfangseinrichtung für die Funksignale des Fernsteuersenders direkt verbunden werden kann. Dieser zusammengefasst Kanal-Anschluss ist bevorzugt einer Datenschnittstelle der Modellflugkörpersteuer- und Empfangseinrichtung zugeordnet. Mit diesem zusammengefassten Kanalanschluss bzw. der Datenschnittstelle ist es möglich, auf eine sonst notwendige Vielzahl von Eingängen für gesonderten Leitungen für jeden Steuerkanal zu verzichten. Der einzelne, zusammengefasste Kanalanschluss fasst vorteilhafterweise mehrere Steuerkanäle auf einer oder mehreren gemeinsamen Steuerleitungen zusammen, zum Beispiel in Form einer dreiadrigen Leitung, bei der insbesondere eine Leitung ein serielles Digitalsignal führt.

Die oben erwähnte "single-line"-Datenschnittstelle ist bevorzugt eine Hochgeschwindigkeitsdatenschnittstelle. Ein daran angeschlossenes Empfangsmodul (zum Beispiel vollständiger Empfänger mit Empfangseinrichtung und -modul oder ein Satellitenempfänger) kann so konfiguriert sein, dass dieses die Information (z.B. Kanaldaten) sequentiell in Form von Datenpaketen an die Modellflugkörpersteuer- und Empfangseinrichtung bzw. das darin enthaltene Empfangsmodul sendet. Entsprechend ist vorzugsweise auch die Modellflugkörpersteuer- und Empfangseinrichtung so eingerichtet, dass die sequentiell in Form von Datenpaketen empfangenen Daten empfangen und verarbeitet werden können.

Das Empfangsmodul ist nach einer ersten bevorzugten Ausführungsform in einem separaten Gehäuse außerhalb des Gehäuses Modellflugkörpersteuer- und Empfangseinrichtung angeordnet, welche die verringerten Kanalleitungen ausgangsseitig über den oben erwähnten Datenkanal ausgibt (Satellitenempfänger).

Gemäß einer weiteren bevorzugten Ausführungsform der Erfindung ist das Empfangsmodul in dem Gehäuse oder Modellflugkörpersteuer- und Empfangseinrichtung integriert. Es ist möglich, dass die Modellflugkörpersteuer- und Empfangseinrichtung dann - obwohl dies zum Betrieb nicht unbedingt erforderlich ist - dennoch einen oder mehrere freie Eingänge zum Anschluss weiterer Empfangsmodule bereitstellt.

Das Empfangsmodul ist vorzugsweise ein 2,4 GHz-Empfänger, der nach dem Frequenzspreizverfahren (zum Beispiel FHSS oder DSSS, siehe Norm EN 300328) arbeitet, insbesondere mit einem redundanten Empfangsprinzip (diversity bzw. mit mehreren Antennen).

Die Modellflugkörpersteuer- und Empfangseinrichtung und/oder dessen Gehäuse weist vorzugsweise zumindest eine Buchse oder einen Anschluss für einen oder zwei oder mehrere Satellitenempfänger auf sowie mindestens als Steuerausgang vier Buchsen für RC-Servos.

Die Modellflugkörpersteuer- und Empfangseinrichtung und/oder dessen Gehäuse weist weiterhin bevorzugt mindestens eine Buchse und/oder einen Anschluss und/oder einen Eingang für eine an dem Helikopter befestigbare Sensoreinheit auf. Die Sensoreinheit umfasst einen oder mehrere Kreisel, bevorzugt handelt es sich dabei um eine Einheit mit einem zwei oder dreiachsigen Drehratensensor. Der Sensor kann dabei auch ganz oder teilweise aus einzelnen Drehratensensoren mit verschieden orientierten einachsigen Sensoren gebildet sein.

Nach einer weiteren bevorzugten Ausführungsform der Erfindung ist der Sensor oder sind die Sensoren, insbesondere Drehratensensoren, im Gehäuse der Modellflugkörpersteuer- und Empfangseinrichtung integriert.

Weiterhin umfasst das Gehäuse bevorzugt eine Buchse oder einen Anschluss für eine Programmierschnittstelle (zum Beispiel USB-Schnittstelle oder serielle Schnittstelle) und/oder ein Display mit Eingabeschnittstelle zur Programmierung der Geräteparameter.

Die Modellflugkörpersteuer- und Empfangseinrichtung kann außerdem "klassische" Kanalanschlüsse zum Anschluss eines herkömmlichen RC-Empfängers umfassen. Ein herkömmlicher RC-Empfänger weist mehrere Kanalausgänge auf und ist dann über jeweils ein Kabel pro Kanal mit der Modellflugkörpersteuer- und Empfangseinrichtung verbunden. Bevorzugt weist die Modellflugkörpersteuer- und Empfangseinrichtung aus Platzgründen keine solchen "klassischen" Kanalanschlüsse mehr auf. Dies bietet den wichtigen Vorteil, dass die damit sehr kleine und vor allem leichte Modellflugkörpersteuer- und Empfangseinrichtung damit erstmals in sehr kleinen, leichten Helikopterflugmodellen montiert werden kann. Dieser Vorteil ergibt sich ganz besonders in Verbindung mit einem vollständig integrierten Empfänger.

Die Modellflugkörpersteuer- und Empfangseinrichtung nach der Erfindung führt außerdem ein Verfahren zur Regelung und Stabilisierung des Modellhelikopters durch. Dieses Verfahren umfasst einen Regler, der einen programmierten Algorithmus umfasst. Der Regelalgorithmus stellt Stellsignale für ein oder mehrere Ansteuervorrichtungen zur Verfügung.

Die Erfindung bezieht daher auch auf ein Verfahren, bei dem eine Regelung und Stabilisierung eines Modellhelikopters durchgeführt wird, gemäß Anspruch 11.

Das Verfahren umfasst nach einer ersten Alternative eine Selbstlernfunktion (Auto-Learn-Funktion), die mit dem Regelverfahren gekoppelt ist. Dem Regelverfahren und der Selbstlernfunktion werden vorzugsweise ein oder mehrere Steuereingangssignale (des Piloten) und ein oder mehrere Sensoreingangssignale zur Verfügung gestellt. Die Selbstlernfunktion berechnet automatisch Parameter und/oder Trimmwerte auf Basis der Steuereingangssignale und Informationen des Regelalgorithmusses. Die automatisch ermittelten Parameter und/oder Trimmwerte werden mit dem Regelalgorithmus gemeinsam genutzt. Der Regelalgorithmus errechnet die Stellsignale für den Ausgang des Reglers aus den Eingangssignalen und den Trimmwerten. Die Stellsignale werden dann an den oder die Ansteuervorrichtungen für die Helikoptersteuerung und auch an die Selbstlernfunktion weitergeleitet. Der Fluglagenregler ermittelt und optimiert somit, wenn dies vom Nutzer so gewünscht ist, während des Flugs des Flugkörpers eine Einstellung von für die Fluglagenregelung notwendiger Trimmwerte und/oder sonstiger für die Fluglagenregelung notwendiger Einstellparameter.

Das Verfahren zur Regelung eines Helikoptermodells umfasst einen Regler für die Taumelscheibe und einen Regler für die Hochachse (senkrechte Achse in Gierrichtung). Das Verfahren umfasst hierzu sowohl einen Regelalgorithmus für die Taumelscheibe als auch einen Regelalgorithmus für das Heck des Helikopters. Das Verfahren umfasst nach einer Alternative eine Kopplung des Heckreglers mit dem Taumelscheibenregler. Dabei wird insbesondere mindestens ein Steuereingangssignal und mindestens ein Sensoreingangssignal sowohl dem Taumelscheibenregler als auch dem Heckregler zur Verfügung gestellt. Die Information, die dem Taumelscheibenregler zur Verfügung gestellt wird, wird dann gemeinsam vom Heckregler genutzt.

Bei einem Helikoptermodell wird die Fluglage des Modells in Richtung der Hochachse in der Regel durch den Heckrotor beeinflusst bzw. bestimmt. Da die Einstellung der Position des Heckrotors bei Helikoptermodellen besonders schwierig ist, kommt üblicherweise ein hochwertiger Regler für das Heckkreiselsystem nach einem Integralregel-Prinzip (Heading Hold) zum Einsatz, welches bevorzugt in dem Helikopterfluglagenregler integriert ist. Bei einem Kreiselsystem nach dem Integralregel-Prinzip wird bekanntlich ein Steuersignal für das Heck so verarbeitet, dass der Kreisel das Heck weitestgehend in der Lage festhält, die durch das Steuersignal eingestellt wurde (Elimination des Windfahneneffekts). Bevorzugt ist der erfindungsgemäß vorgesehene Heckregler gegenüber herkömmlichen Heckreglern mit Zusatzfunktionen erweitert, die durch die speziell im Helikopterfluglagenregler gegenüber vergleichbaren nichtintegrierten Heckkreiselsystemen nun wegen der zusätzlich verfügbaren Signale des Helikopterfluglagenregler bereitgestellt werden können. Durch diese Zusatzfunktionen kann die Regelgüte des Heckkreiselsystems noch weiter verbessert werden. Nach der hier beschriebenen bevorzugten Ausführungsform umfasst die Einrichtung oder das Verfahren somit einen Heading Hold-Regler für die Modellhochachse, welcher eine Signalverbindung zum Regler für die Längs- und Querachse und/oder eine Signalverbindung zu den Steuereingängen umfasst, so dass der Heading-Hold-Regler auf Modellbewegungen in Richtung der Hochachse, wie zum Beispiel Drehmomentschwankungen, hervorgerufen von Steuersignalen und/oder Regeleingriffen im Zusammenhang mit der Längs- und Querachse und/oder zyklischen Steuersignalen, früher durch einen geeigneten Regeleingriff reagieren kann. Nach einer bevorzugten Ausführungsform umfasst der Heckregler auch eine Reduzierung der Empfindlichkeit (Kreiselempfindlichkeit) in Abhängigkeit der Geschwindigkeit. Dies hat den Vorteil, dass es bei höheren Fluggeschwindigkeiten nicht zu einem Aufschwingen des Hecks kommt.

Gemäß einer alternativen Ausführungsform des Verfahrens umfasst der Fluglagenregler eine Stopphilfefunktion, genauer gesagt ein Abstoppverfahren zur Abstoppunterstützung bezüglich einer Steuerkomponente des Modellhelikopters. Das Abstoppverfahren umfasst einen programmierten Regler, der Ausgangssignale für einen oder mehrere Ansteuervorrichtungen (z.B. Servos) zur Steuerung des Helikopters zur Verfügung stellt. Der Regler umfasst einen Abstoppalgorithmus und eine Lernfunktion, wobei der Abstoppalgorithmus so programmiert ist, dass dieser eine Abstoppstützverhältnis oder eine Abstopprate errechnet, welches/welche bei einem Stoppmanöver zur Bildung des Ausgangssignals verwendet wird. Dem Abstoppregler wird hierzu mindestens ein Eingangssteuersignal und mindestens ein Sensoreingangssignal zugeführt. Wenn das Eingangssteuersignal ein Stoppmanöver vorgibt, bei dem ein oder mehrere Ansteuervorrichtungen einen Befehl erhalten, kein Signal mehr auf die entsprechende Funktion des Helikopters auszugeben, ist vorgesehen, dass dann die Lernfunktion eine oder mehrere Informationen speichert, welche dem mindestens einen Steuereingangssignal, dem mindestens einen Sensorsignal und dem Ausgangssignal für die Ansteuervorrichtung(en) entspricht oder sich darauf bezieht. Der Abstoppregler errechnet mit Hilfe des programmierten Controllers eine Anzahl von Kurven, welche das Abstoppereignis auf Basis der gespeicherten Informationen definieren. Der Abstoppregler wertet das Abstoppereignis aus und ermittelt, ob dieses ein Überschwingen, ein Unterschwingen oder ein akzeptables Stoppen darstellt. Die Abstoppunterstützung wird in Abhängigkeit der zuvor beschriebenen Stoppauswertung erniedrigt, wenn ein Unterschwingen vorliegt, oder erhöht, wenn die Stoppauswertung zeigt, dass ein Überschwingen vorliegt.

Ein Vorteil vieler in der vorliegenden Patentanmeldung beschriebener Ausführungsformen ist ein verringerter Volumenbedarf des Helifluglagenreglers, besonders wenn das Gehäuse des Fluglagenreglers in ein kleines Helikoptermodell montiert werden muss. Ein weiterer Vorteil besteht darin, dass der Fluglagenregler einen erweiterten Funktionsumfang gegenüber bisherigen Fluglagenreglern aufweist, was durch die verbesserte Regelung erreicht wird. Diese Vorteile ergeben sich aus der Verwendung eines Fluglagenreglers, der direkt mit einem Empfänger für die Eingangssignale verbunden ist, sowie durch die Kombination einer Vielzahl von Einzelkanälen in eine oder mehrere gemeinsam genutzte Steuerleitungen, beispielsweise in dem eine dreiadrige Leitung verwendet wird, die ein serielles Digitalsignal mit der Kanalinformation an den Fluglagenregler überträgt.

Die Erfindung ist nicht auf die Verwendung in einem bestimmten Typ von funkferngesteuerten Modellen beschränkt, ist aber besonders zweckmäßig in ferngesteuerten Helikoptermodellen als Fluglagenregler einsetzbar. Im Gehäuse des Fluglagenreglers sind gemäß einer bevorzugten Ausführungsform ein Empfangsmodul und ein mehrachsiger, kreiselbasierter und programmierbarer Fluglagenregler untergebracht. Das Empfangsmodul kann aber auch gemäß einer weiteren bevorzugten Ausführungsform außerhalb des Gehäuses des Fluglagenreglers angeordnet sein. Typischerweise umfasst der Fluglagenregler zumindest fünf Steuereingangskanäle: Roll, Nick, Kollektivpitch, Heckrotoransteuerung, sowie einen Gaskanal. Aufgrund der Tatsache, dass die Einheit mit dem Fluglagenregler einen traditionellen Funkempfänger ersetzen kann, ist es möglich, dass weitere Kanäle vom Satellitenempfänger durch die Einheit zu den Ausgängen der Einheit geführt sind. An dieser Stelle ist zu bemerken, dass sich der Begriff "Satellitenempfänger" auf Empfänger bezieht, die außerhalb des eigentlichen Hauptempfängers angeordnet sind. Der Begriff bezieht sich daher nicht auf Signale, welche beispielsweise durch Telekommunikationssatelliten verwendet werden.

Vorteilhafterweise kann in dem Fluglagenregler gemäß der Erfindung eine freie Zuordnung der zu Beginn erwähnten Kanäle zu den einzelnen Funktionen durch die im Fluglagenregler enthaltene Software vorgenommen werden. Die Kanalzuordnung kann also vom Nutzer frei festgelegt werden.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: eine perspektivische Darstellung eines Helikopterfluglagenreglers mit Empfangseinrichtung, der mit einem bzw. mehreren Empfangsmodul/-en verbunden ist,
- Fig. 2A: ein Blockdiagramm mit einem herkömmlichen Empfänger und einem Fluglagenregler nach dem Stand der Technik,
- Fig. 2B: ein Blockdiagramm mit einem Empfänger oder Empfangsmodul und einem Fluglagenregler gemäß der Erfindung,
- Fig. 2C: ein Blockdiagramm mit einer beispielhaften Möglichkeit zur Übertragung von Daten über eine Hochgeschwindigkeitsdigitaldatenschnittstelle,
- Fig. 3A: ein Blockdiagramm mit einem Fluglagenregler nach dem Stand der Technik,
- Fig. 3B: ein Blockdiagramm mit einem Fluglagenregler gemäß der Erfindung,
- Fig. 4A: ein Blockdiagramm mit einem Algorithmus zur Regelung der Taumelscheibe und des Heckrotors nach dem Stand der Technik,
- Fig. 4B: ein Blockdiagramm mit einem Algorithmus zur Regelung der Taumelscheibe und des Heckrotors nach der Erfindung,
- Fig. 5: ein Blockdiagramm mit einem Beispiel für eine adaptive Regelschleife, welche einen beispielhaften Algorithmus für die Regelung des "Feed Forward"-Werts und der Selbstlernfunktion zeigt,
- Fig. 6: ein Blockdiagramm mit einer adaptiven Regelschleife, welche einen beispielhaften Algorithmus zur Regelung und Stabilisierung der Drehrate einer Achse eines ferngesteuerten Helikopters und außerdem ein Beispiel für eine Selbstlernfunktion zeigt,
- Fig. 7A: ein Diagramm mit einem Beispiel einer Nulldurchgangsrate, bei der eine Ansteuerung für den Helikopter einen vorgegebenen Stopp-Punkt überschreitet,
- Fig. 7C: ein Diagramm mit einem Beispiel für eine Nulldurchgangsrate, bei der eine Ansteuerung für den Helikopter zu früh stoppt und

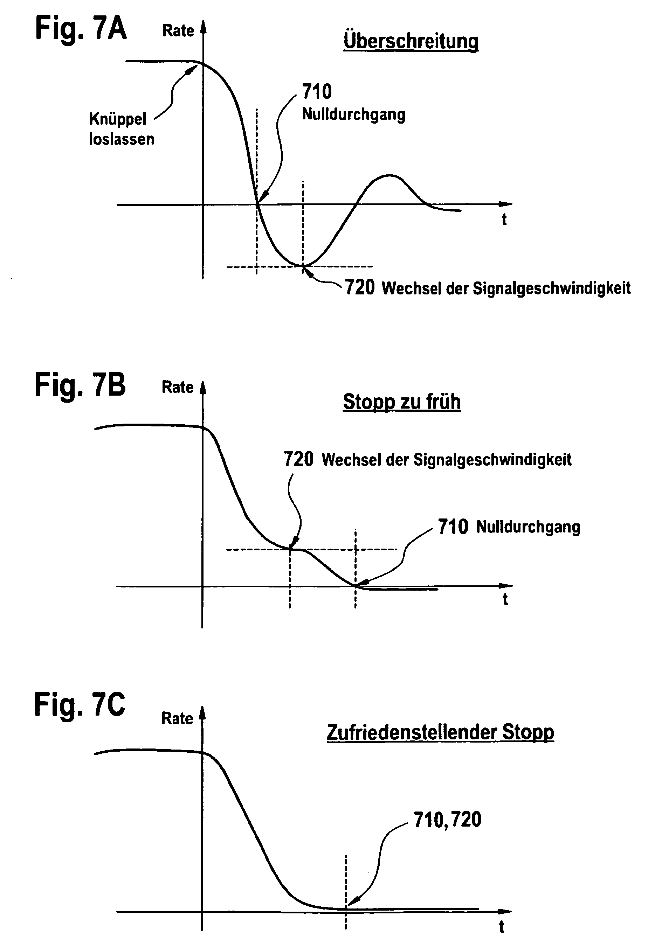

- Fig. 7C: ein Diagramm mit einem Beispiel für eine Nulldurchgangsrate, bei der eine Ansteuerung für den Helikopter in geeigneter Zeit erfolgt.

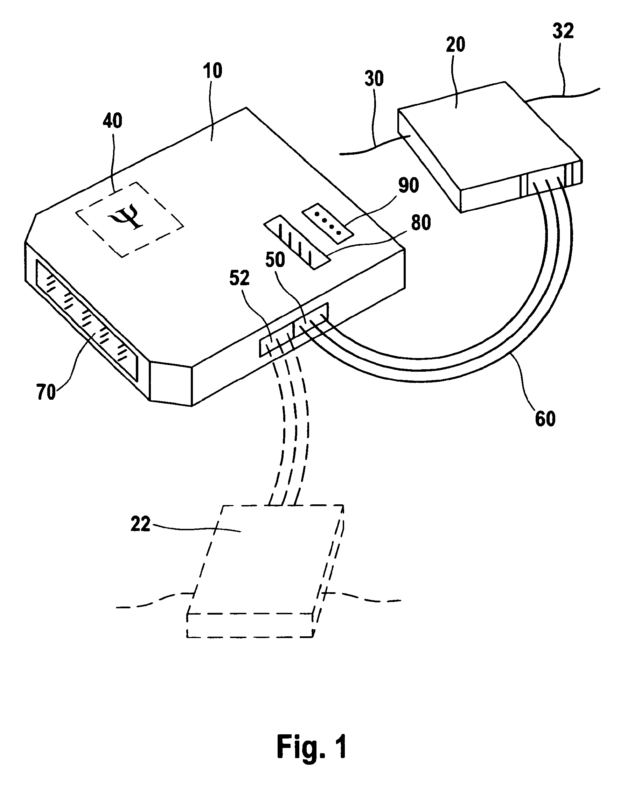

Wie in Fig. 1 dargestellt, ist der Eingang für das Empfangsmodul vorzugsweise durch eine elektrische Leitungsverbindung mit verringerter Anzahl von Einzeladern gebildet, wobei eine Vielzahl von Eingangkanälen in einer oder mehreren Signalleitungen zusammengeführt sind. Fig. 1 zeigt das Gehäuse 10 des Mini-Helikopterfluglagenreglers 10 verbunden mit einem 2,4 GHz DSSS Satellitenempfänger 20 mit zwei Empfangsantennen 30, 32. Obwohl eine physikalische Kommunikationsverbindung zwischen Regler und Empfänger dargestellt ist, kann die Verbindung auch drahtlos erfolgen. Gehäuse 10 kann außerdem ein Kreiselsensorelement 40 enthalten. Das Helikopterfluglagenregler-Gehäuse beinhaltet zwei oder drei senkrecht zueinander angeordnete Kreiselsysteme (Drehratensensoren). Satellitenempfänger 20 kann an einer Buchse 50 des Gehäuses angeschlossen werden. An eine weiteren Buchse 52 des Gehäuse kann ein weiterer Satellitenempfänger 22 angeschlossen werden. Die Signalleitung vom Empfänger 20 zum Helikopterfluglagenregler-Gehäuse 10 ist dreiadrig ausgeführt. Gehäuse 10 weist Buchsen 70 für die Stromversorgung und mindestens vier RC-Servos auf. Entsprechende mechanische Ansteuervorrichtungen sind allgemein gebräuchlich zur Ansteuerung von Funktionen ferngesteuerter Modelle. Buchse 80 dient beispielsweise zum Anschluss eines handlichen Programmiergeräts, mit dem der Helikopterfluglagenregler programmiert werden kann. Buchse 90 ist beispielsweise ein USB-Port, an welchem ein USB-Kabel angeschlossen werden kann, über das ein Personalcomputer zur Programmierung mit einer Programmiersoftware und für den Upload einer neuen Firmware oder Modellparametern angeschlossen werden kann. Der Helikopterfluglagenregler kann außerdem eine Bankumschaltung aufweisen, mit der unterschiedliche gespeicherte Parametergruppen abrufbar sind.

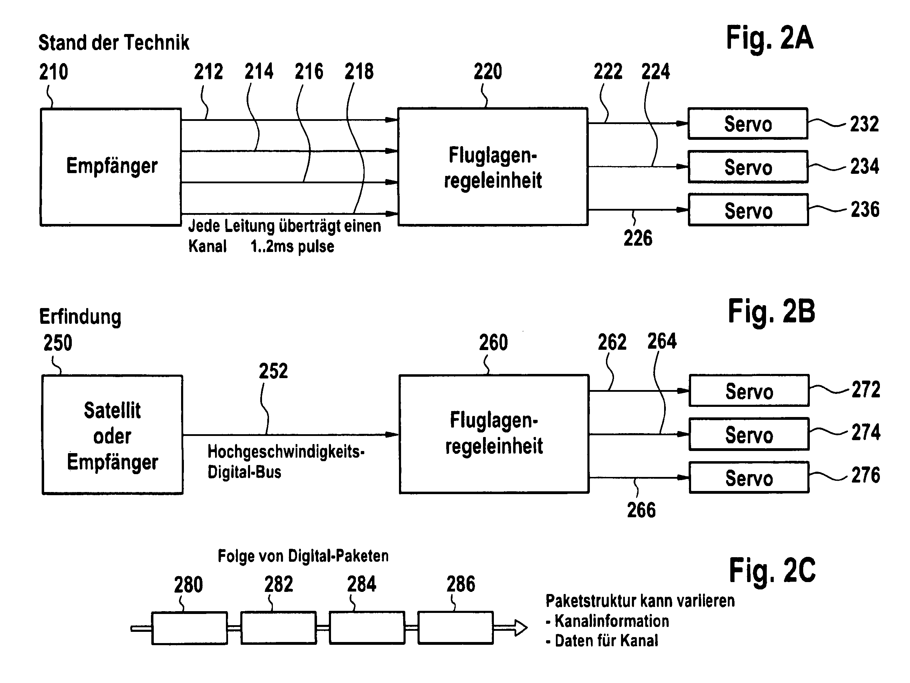

Fig. 2A zeigt in schematischer Darstellung ein Blockdiagram eines an sich bekannten Fluglagenreglers. Der an sich bekannte herkömmliche Empfänger 210 ist mit der Fluglagenreglereinheit 220 über getrennte Kabel 212, 214, 216 und 218 verbunden. Jedes dieser einzelnen Kabel 212, 214, 216 und 218 ist für die Übertragung einer einzigen Steuerinformation (Kanal) vom Empfänger 210 zu Fluglagenregler 220 vorgesehen. Fluglagenregler 220 leitet dann den einzelne Servos 232, 234 und 236 Ansteuersignale zu. Jedes Servo ist mit dem Fluglagenregler jeweils über ein Kabel 222, 224 und 226 verbunden.

Fig. 2B zeigt ebenfalls in schematischer Darstellung ein Blockdiagramm eines Reglers nach der Erfindung. Wie in Fig. 2B gezeigt, kommuniziert der Empfänger 250 mit dem Fluglagenregler 260 über eine einzelne Hochgeschwindigkeitsdigitalverbindung 252. Fluglagenregler 260 leitet auch hier Steuersignale den einzelnen Servos 272, 274 und 276 über jeweils zugeordnete Kabel 262, 264 und 266 zu. Wie Fig. 2C zeigt, ist Hochgeschwindigkeitsdigitalverbindung 212 so eingerichtet, dass alle Signale des Empfängers zum Fluglagenregler in Form einer Sequenz von Datenpaketen 280, 282, 284 und 286 gesendet werden. Die Struktur der Datenpakete kann im Prinzip eine beliebige Struktur haben. In der Regel umfassen die Datenpakete einen Kanalwähler und darauffolgende Kanaldaten, die vom Empfänger 250 zum Fluglagenregler 260 übertragen werden. Die Verwendung einer einzelnen Hochgeschwindigkeitsdatenverbindung 252 ermöglicht eine schnellere Übertragung von Daten sowie eine erhöhte Sicherheit der Datenübertragung. Bei Anordnungen nach dem Stand der Technik kann der Fall eintreten, dass eine der Leitungen 212, 214, 216 oder 218 defekt oder unterbrochen ist. In diesem Fall kann dies zu einem Verlust der Kontrolle über das ferngesteuerte Modell führen. Im Falle eines Helikoptermodells führt dies in der Regel zu einer Zerstörung des Modells. Die Auslegung der Verbindung vereinigt eine hohe Robustheit und Zuverlässigkeit miteinander ohne unnötig hohe Herstellungskosten oder ein Mehrgewicht des Gehäuses zur Folge zu haben. Eine weitere Erhöhung der Funktionssicherheit erhält man durch die Möglichkeit, zwei redundante Empfänger an den Fluglagenregler anzuschließen, die das gleiche Sendesignal empfangen. Wenn in einer solchen Anordnung einer der Empfänger oder eine der Verbindungsleitungen zwischen Empfänger und Regler ausfällt oder eine Fehlfunktion hat, kann der andere Empfänger weiterhin Signale empfangen und die entsprechenden Daten an den Regler weiterleiten, wodurch ein Absturz verhindert werden kann. Wie bereits beschrieben, sind Servos 272, 274 und 276 mit einfache An/Aus-Signalen (Bei RC-Servos übliche Pulsbreitenmodulation) angesteuert. Die Servos 272, 274 and 276 sind mechanisch mit der Taumelscheibe des Helikoptermodells verbunden, wodurch diese bewegt wird.

Gemäß eines ersten Beispiels für eine Ausführungsform der Erfindung sind die Empfangsmittel in einem separaten Gehäuse außerhalb des Gehäuses des Fluglagenregler angeordnet. Das Gehäuse des Fluglagenreglers ist über eine reduzierte Anzahl von Leitungen mit den Satellitenempfängern verbunden. Gemäß einem zweiten Beispiel für eine Ausführungsform der Erfindung sind die Empfangsmittel in dem Fluglagenreglergehäuse integriert. Die Integration von Empfänger 20 in das Gehäuse 10 ermöglichet eine schnellere Verarbeitungsgeschwindigkeit und bietet den Vorteil eines geringen Platzbedarfs in einem ferngesteuerten Helikoptermodell. Dies ist besonders wichtig, um den Fluglagenregler in sehr kleinen Helikoptermodellen unterbringen zu können.

Die Empfangsmittel 20 können gemäß einer bevorzugten Ausführungsform 2,4 GHz-Empfänger sein, die nach dem Frequenzspreizverfahren (zum Beispiel FHSS oder DSSS, wie durch die Norm ETSI (ETSI=European Telecommunications Standards Institute) EN 300328, Harmonized European Market Standard (Telecommunications Series) beschrieben und beispielsweise nach einem redundanten Empfangsprinzip arbeiten, wobei die Empfänger sogenannte "Diversity"-Antennen oder eine Vielzahl von Antennen umfassen. Geeignete einsetzbare Empfangsmittel sind beispielsweise an sich bekannte, kommerziell verfügbare Spectrum-Empfänger der Fa. Horizon Hobby (Champaign, IL, USA) oder Duplex-Empfänger der Fa. Jeti Model, Pribor, Tschechische Republik oder Futaba S-Bus Empfänger, die beispielsweise von der Fa. robbe Modellsport Beteiligungs GmbH, Deutschland, vertrieben werden.

Das Reglergehäuse 10 weist vorzugsweise eine Anzahl von Steckerbuchsen oder Schnittstellen für eine oder mehrere Satellitenempfänger auf sowie mindestens vier Steckerbuchsen für RC-Servos. Diese vier Steckerbuchsen sind drei Ausgängen für die Taumelscheibe und einem zusätzlichen Ausgang für den Heckrotor zugeordnet. Das Gehäuse umfasst weiterhin eine Buchse oder eine Schnittstelle für eine Sensoreinheit, die einen bi-axialen oder tri-axialen Drehratensensor umfasst, wobei der Sensor auch aus Einzelsensoren aufgebaut sein kann, die verschiedene Orientierungen zueinander haben, und/oder die Drehratensensoren sind im Gehäuse des Helikopterfluglagenreglers untergebracht. Diese Sensorbuchse kann von den anderen Buchsen getrennt oder, je nach Design des Reglers 10, bei den anderen Buchsen ein- oder angefügt sein. Das Gehäuse umfasst weiterhin vorzugsweise eine Buchse für eine Programmierschnittstelle (z.B. USB Interface oder serielle Schnittstelle) und/oder ein Display (nicht in Fig. gezeigt) zur Eingabe mit einer Eingabeschnittstelle zur Programmierung der Geräteparameter.

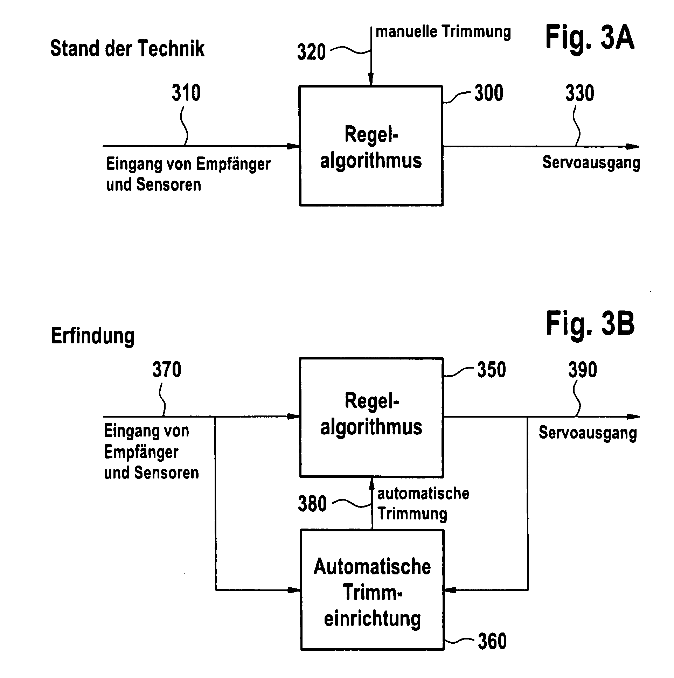

Nach einer weiteren bevorzugten Ausführungsform der Erfindung umfasst der Helikopterfluglagenregler eine Selbstlernfunktion, welche typischerweise in Form eines Algorithmusses, der sich aus einem Satz von Programmierbefehlen in einem Mikroprozessor oder -controller oder Hardware oder einer Mischung aus beidem zusammensetzt, welche unabhängig eine Anpassung oder Optimierung von Trimmwerten und/oder anderer Einstellparameter während des Flugs vornimmt, die für den Fluglagenregler erforderlich sind. Wie in Fig. 3A gezeigt, welche den Stand der Technik wiedergibt, erhält der Regelalgorithmus eingangsseitig Signale vom Empfänger und den Sensoren 310. Die eingangsseitigen Signale können ggf. an die die Funkfernsteuerung bedienende Person zurückgeführt werden. Die Bedienperson kann dann über eine zusätzliche nicht dargestellte Bedieneinheit mit Hilfe der Information aus den Eingangssignalen des Empfängers und des Sensors 310 sowie seiner gemachten Erfahrungen und Erkenntnisse eine geeignete Parameterwerte oder Einstellparameter vornehmen. Der Trimmeingang 320 für die manuellen Trimmwerte wird vom Regelalgorithmus 300 verarbeitet, wobei außerdem die Signaleingänge des Empfängers und des Sensors 310 einbezogen werden.

Der Regelalgorithmus stellt dann Ausgangssignale 330 für die Servos zur Verfügung, um die Steuerfunktionen des Helikopters zu steuern.

In der vorliegenden Erfindung, wie in Fig. 3B gezeigt, ist der Regelalgorithmus mit der automatischen Trimmeinrichtung 360 verbunden. Die automatische Trimmeinrichtung 360 versieht den Algorithmus mit der Möglichkeit, die die Reaktion der Regelschleife schneller zu ermitteln und einzustellen. Gemäß einer Ausführungsform der Erfindung werden die Eingänge, die vom Empfänger und den Sensoren 370 kommen, gemeinsam zu Regelalgorithmus 350 und der automatischen Trimmeinrichtung 360 übertragen. Die automatische Trimmeinrichtung 360 empfängt die Steuersignale des Bedieners, die vom Empfänger kommen, zusammen mit den Messwerten der Sensoren und errechnet alle Trimmwerte 380. Die ermittelten Trimmwerte 380 werden dann an den Regelalgorithmus weitergeleitet. Der Regelalgorithmus gibt die verschiedenen Steuersignale an die Servos 390 aus. Die ausgegebenen Steuersignale können zudem auch an die automatische Trimmeinrichtung 360 geführt werden, um die Trimmeinrichtung 360 mit so vielen Informationen wie möglich zu versorgen.

Die automatische Trimmeinrichtung 360 kann verschiedenste interne wie externe Signale überwachen und aus der Historie der überwachten Signale Trimmkorrekturen ermitteln. Auf diese Weise wird die Reaktion des Gesamtsystems während der gesamten Betriebszeit fortwährend optimiert. Die automatische Trimmeinrichtung 360 kann prinzipiell jedes verfügbare Steuersignal auswerten und trimmen, vorzugweise jedoch nur den Feed Forward (Vorwärtskopplung), die Proportionalverstärkung und die Integralverstärkung sowie die Nullpunktoffsets (auch Trimmwert bezeichnet), die Vorkompensationsstärke (einschließlich des Drehmoments und dynamischer Effekte) und die Adaptionszeit für den adaptiven Regelalgorithmus. Die automatische Trimmeinrichtung 360 kann außerdem beliebige weitere Werte überwachen oder trimmen. Die automatische Trimmeinrichtung 360 kann fortwährend den funkferngesteuerten Hubschrauber trimmen oder es ist vorgesehen, dass die Trimmeinrichtung durch den Benutzer ausgeschaltet wird, um eine unbeabsichtigte Vertrimmung zu vermeiden.

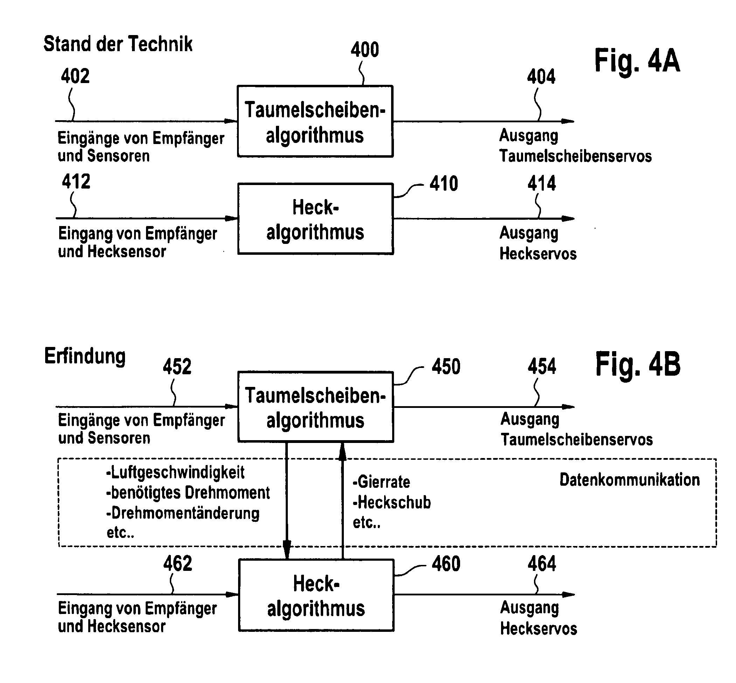

Figuren 4A und 4B zeigen zusätzlich, wie sich die Regelung und Stabilisierung des ferngesteuerten Helikopters vom Stand der Technik unterscheidet. Gemäß üblichen Regelansätzen werden die Eingangssignale von Empfänger und Sensoren 402 an einen Mikroprozessor geleitet, der ein Taumelscheibenregelprogramm 400 umfasst. Der programmierte Taumelscheibenregelalgorithmus verarbeitet diese Eingangssignale zusammen mit den manuellen Trimmeingängen. Danach werden die verarbeiteten Daten an den Ausgang für die Taumelscheibenservos 404 ausgegeben. Entsprechend werden die Eingangssignale des Empfängers und des Sensors für das Heck 412 einem programmierten Algorithmus für das Heck 410 zugeführt, wo eine Verknüpfung mit manuellen Trimmeingängen vorgenommen wird. Der Heckalgorithmus 410 leitet die verarbeiteten Signale an den Ausgang für das Heckservo 414 weiter. Üblicherweise arbeiten Taumelscheibenalgorithmen 400 nach dem Stand der Technik separat und unabhängig von Heckalgorithmus 410.

Gemäß einer Ausführungsform der Erfindung wird die vorstehend beschriebene Trennung jedoch aufgehoben. Gemäß dieser Ausführungsform, wie in Fig. 4B gezeigt, kommunizieren der Taumelscheibenalgorithmus und der Heckalgorithmus 460 ständig miteinander. Wie im Blockdiagramm dargestellt, ermöglicht die vorliegende Erfindung einen Taumelscheibenalgorithmus 450, der mit dem Heckalgorithmus 460 kommuniziert, so dass Daten von den Eingängen des Empfängers und der Sensoren 452 gemeinsam mit dem Eingang des Hecksensors 462 gemeinsam genutzt werden. Der Taumelscheibenalgorithmus und der Heckalgorithmus tauschen hierfür bevorzugt zumindest Informationen aus, wie Geschwindigkeit des Helikopters (airspeed), benötigtes Drehmoment, Drehmomentänderung, Gierrate und Heckschubkraft. Durch den Austausch dieser Daten können die beiden Algorithmen sich gegenseitig ergänzen, was insgesamt zu einer verbesserten Stabilisierung des Helikopters führt. Entsprechend einem Beispiel kann der Taumelscheibenalgorithmus 450 nicht nur die ursprünglichen Eingänge des Empfängers und der Sensoren erhalten, sondern zusätzlich den Eingang, welcher vom Hecksensor 462 stammt, sowie die Ansteuerung des Ausgangs des Heckalgorithmusses 460, welche vom Heckalgorithmus 460 an das Heckservo 464 gesendet wird. Entsprechend kann der Heckalgorithmus dann auch alle Informationen der Empfänger und Sensoren empfangen, gemeinsam mit eventuellen Ansteuerungen, die vom Taumelscheibenalgorithmus 450 an die Taumelscheibenservos 454 ausgegeben werden. Diese Besonderheit ermöglicht es dem Helikopter, die Informationen schneller zu verarbeiten, wodurch eine höhere Stabilität des Helikopters erzielt wird. Außerdem wird einer verbesserte Steuerbarkeit und ein besseres Ansprechverhalten auf die Steuerung erhalten.

Gemäß einer weiteren Ausführungsform umfasst der Fluglagenregler eine zusätzliche Steuerung der Hochachse (vertikale Achse in der Gierrichtung). In einem Hubschraubermodell wird die Ausrichtung des Modells in Richtung der Hochachse in der Regel vom Heckrotor bestimmt oder beeinflusst. Da die Einstellung der Position des Heckrotors in Helikoptermodellen besonders schwierig ist, wird üblicherweise ein qualitativ hochwertiger Regler im Gyro- bzw. Kreiselsystem eingesetzt, welcher nach einem Ingegralregelprinzip arbeitet (heading hold, heading lock), was erfindungsgemäß bevorzugt ist. Bei einem Kreiselsystem, das nach dem an sich bekannten Integralregelprinzip arbeitet, wird ein Stellsignal für das Heck in der Weise verarbeit, dass der Kreisel das Heck größtenteils in der Position hält, die vom Steuersignal vorgeben wurde. Dies vermeidet oder lindert den sogenannten "Windfahneneffekt", welcher erfahrungsgemäß auftritt, wenn das Heck des Helikopters Seitenwindeinflüssen ausgesetzt ist. Gemäß einer Ausführungsform wird der Heckregler durch eine Funktionalität erweitert, die im Vergleich zu üblichen Heckreglern eine Möglichkeit zum Austausch mit dem oder den nicht heckbezogenen Reglern hat (siehe Fig. 4B). Gemäß dieser beispielhaften Ausführungsform kommuniziert der Taumelscheibenalgorithmus direkt mit dem Heckalgorithmus um die Zusatzfunktion zu ermöglichen. Diese Kommunikation wird in einem System ohne einen im Fluglagenregler integrierten Heckkreisel ermöglicht, da die Signale im Fluglagenregler zusätzlich zur Verfügung stehen. Diese Kommunikation verbessert die Qualität des Heckkreiselsystems durch die zusätzliche Funktionalität. Gemäß einer bevorzugten Ausführungsform ist der Helikopterfluglagenregler hierzu mit einem Heading Hold-Regler für die Hochachse ausgestattet, welcher eine Signalverbindung zum Regler für die Längs- und Querachse und/oder eine Signalverbindung zu den Steuereingängen hat, damit der Heading Hold-Regler je nach den Steuereingängen früher geeignete Ausgangssignale zum Entgegenwirken von Bewegungen um die Hochachse erzeugt, wobei besonders beispielsweise Steuereingriffe, die von Drehmomentschwankungen, Steuersignalen und/oder anderen Steuereingriffen in Richtung der longitudinalen oder transversalen Achse und/oder zyklischen Steuereingriffen herrühren, kompensiert werden.

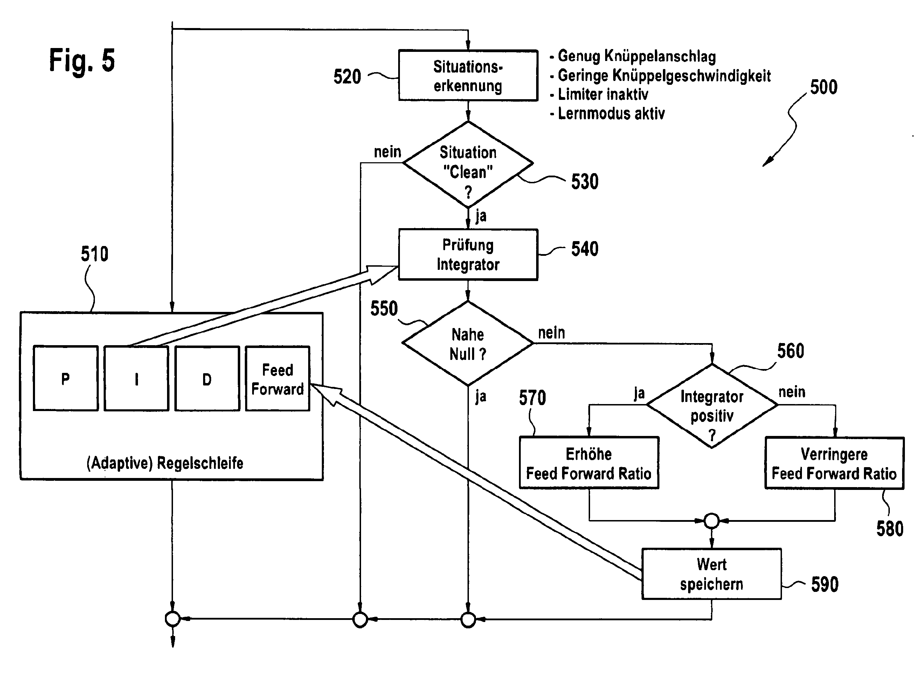

Wie weiter oben beschrieben, kann die vorliegende Erfindung eine adaptive Reglerschleife umfassen, die geeignet ist, Korrekturen für die Taumelscheibenservos und das Heckservo durchzuführen, um ein ferngesteuerte Helikoptermodell zusätzlich zu stabilisieren. Eine beispielhafte Ausführungsform der Selbstlernsoftware ist in Fig. 5 dargestellt. In Fig. 5 zeigt Block 500 ein Beispiel für einen programmierten Algorithmus, der den Forward Feed (Vorsteuerung) einstellt. Der Algorithmus beginnt in Schritt 510 mit einer adaptiven Reglerschleife 510. Die adaptive Reglerschleife 510 schätzt zunächst den Status mittels eines Situationserkennungsschritts 520. Der Algorithmus ist so programmiert, dass dieser den Status des ferngesteuerten Helikoptersystems ermittelt, in dem geprüft wird, ob hinreichende Knüppelbewegung (stick input) vorliegt, ob eine hinreichend geringe Bewegungsgeschwindigkeit der Knüppelbewegung (stick change rate) vorliegt, ob kein Limiter aktiviert ist, ob der Selbstlernmode an- oder ausgeschaltet ist oder andere Einflussgrößen erfüllt sind. Nachdem der Algorithmus den Status festgestellt hat, wird Schritt 530 ausgeführt, um festzustellen, ob die Situation "clean" vorliegt. Das System wird dann als "clean" bezeichnet, wenn keine Knüppelbewegung vom Anwender durchgeführt wird. Wenn der Anwender die Knüppel nicht bewegt hat und die Situation als "clean" erkannt wurde wird der Algorithmus mit Schritt 540 fortgesetzt. Ist die die Situation nicht "clean", weil der Anwender die Knüppel bewegt hat, springt die Schleife zurück zur adaptiven Reglerschleife 510, wo das Programm die Analyse neu initialisiert. Wenn Schritt 530 erreicht ist, überprüft das Programm den Integrator in Schritt 540. Wenn der Wert des Integrators in Schritt 550 gerade in einem Bereich von Null liegt, fährt das Programm mit der adaptiven Regelschleife fort. Die Erkennung, ob der Wert im Bereich von Null liegt, kann vom Anwender bestimmt werden oder in der Software als Standartwerte bereits fest vorprogrammiert sein. Diese Standardwerte können vom Helikopterhersteller spezifisch für ein Modell vorgegeben sein. Wenn nun der Integratorwert nicht im Bereich von Null liegt (Schritt 550), wird das Programm bei Schritt 560 fortgesetzt und überprüft, ob der Integratorwert positiv oder negativ ist. Ist der Wert positiv, wird das Programm in Schritt 570 fortgesetzt und der Forward Feed erhöht. Wenn der Wert negativ ist, wird das Programm in Schritt 580 fortgesetzt und der Integratorwert erniedrigt. Der neue Wert für den Forward Feed wird dann in Schritt 590 in der adaptiven Regelschleife gespeichert. Durch das Speichern des Werts in Schritt 590 ist die adaptive Reglerschleife in der Lage, zukünftige Sensorwerte und Steuereingaben des Nutzers mit den gespeicherten Forward Feed-Werten zu berechnen, womit die Kontrolle des ferngesteuerten Helikoptermodells schneller und präziser erfolgen kann.

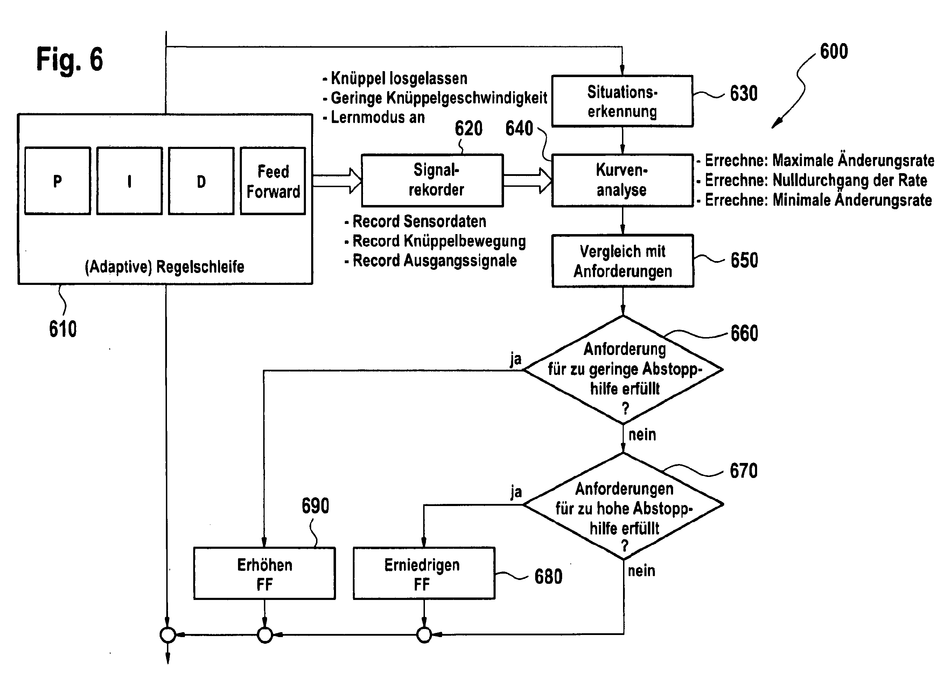

Fig. 6 zeigt ein Blockdiagramm mit einer adaptiven Regelschleife, welche einen beispielhaften Algorithmus 600 zeigt, der mit einer Stopphilfe für eine oder mehrere Steuerachsen des Helikoptermodells ausgestattet ist, die die Steuerfunktionen des ferngesteuerten Helikopters ansteuern. Wenn ein Nutzer mit den in das Fluglagenregelsystem eingegebenen Nutzereingaben einigermaßen zufrieden ist, lässt der Nutzer in der Regel die Steuerknüppel (sticks), welche den Nutzereingaben zugeordnet sind, los, wodurch diese sich in ihre Ausgangsposition zurückstellen. In diesem Fall sind die Knüppel in einem Zustand, bei dem kein Steuerinput vorliegt, da vom Nutzer keine Knüppelbewegung durchgeführt wird. Diese Knüppelstellung definiert ein Stoppereignis, welches durch den beispielgemäße Algorithmus 600 mit einer Stopphilfe unterstützt wird. Der Algorithmus 600 hilft zudem bei jedem Wechsel einer dem System mitgeteilten Steuereingabe. Durch die Stopphilfe wird den Reglern eine Feed Forward-Vorgabekurve des entsprechenden Steuerknüppels vorgegeben, wie sie vom Steuersignal in Verbindung mit dem Ausgang der Reglerschleife abgeleitet ist. Die Form der Kurve wird so vorgegeben, dass ein Überschreiten oder ein Unterschreiten der jeweiligen Systemfunktion vermieden wird, wenn ein Stoppkommando vorgegeben wird. Die Stärke des Signals kann in Abhängigkeit der Umgebungsbedingungen angepasst werden, beispielsweise in Abhängigkeit von Dämpfungsfaktoren des Rotorkopfs, Fläche der Rotorblätter etc.. Die Einstellung der Stärke wird von Algorithmus 600 vorgenommen. Führt der Nutzer eine Eingabe für den Hubschrauber mit einem Steuerknüppel aus, wird Algorithmus 600 inaktiv. Algorithmus 600 initialisiert in Schritt 630 durch Aktivierung den Lernmodus, wenn der Nutzer die Knüppel der Fernsteuerung loslässt, was den zugeordneten Achsen, die den Knüppeln zugeordnet sind, signalisiert, dass Steuersignale, die auf das System wirken, gestoppt werden sollen. Der Start des Algorithmusses führt zu einer Übertragung aller Daten gemäß Schritt 620 zum zyklischen Mehrkanalsignalrekorder. Dieser speichert Daten aller den Reglern zugeordneter Sensoren, Eingangsignale von Knüppelbewegungen des Nutzers und ggf. vorhandene Ausgangssignale für die den Helikopter steuernden Servos. Der Algorithmus verwendet diese Informationen für die Erkennung einer Über- oder Unterschreitung (overshoot/undershoot) und erzeugt die Steuerkurve zur Behandlung eines Abstoppens, wenn der Regler zu einem späteren Zeitpunkt ähnliche Eingangsinformationen des Nutzers und der Sensoren erhält, wodurch das Programm in die Lage versetzt wird, ein zutreffenderes Ausgangssignal für die Servos zu erzeugen, dass ein Abstoppen mit der gewünschten Stopprate ermöglicht.

Wie in Fig. 6 gezeigt, ruft der beispielhafte Algorithmus eine Abschätzung des Systemstatus in Schritt 630 auf. Der Algorithmus prüft Daten, die darüber Auskunft geben, ob der Steuerknüppel losgelassen wurde, ob die momentane Geschwindigkeit in der Nähe von Null ist und ob der Lernmodus aktiviert ist. Wenn diese Voraussetzungen erfüllt sind, fährt der Algorithmus mit Schritt 640 fort und führt eine Kurvenanalyse durch. Zur Durchführung der Kurvenanalyse errechnet das Programm die maximale Änderungsrate, den Nulldurchgang der Rate und das Minimum der Änderungsrate aus den Eingängen von den Sensoren, wie weiter unten beschrieben. Der Algorithmus wechselt dann zu Schritt 650, und vergleicht zu einem bestimmten Zeitpunkt die errechnete Änderungsrate, den Nulldurchgang der Rate und die minimale Änderungsrate mit den Anforderungen des Helikopters. Wenn der Algorithmus diese Werte vergleicht, wird in Schritt 660 ermittelt, ob die errechneten Werte die Anforderungen für eine geringe Abstopphilfe erfüllen. Ist dies der Fall, springt der Algorithmus zu Schritt 690, in dem die Rate die Abstopphilfe erhöht wird. Wenn der errechnete Wert die Anforderungen für eine niedrige Stopphilfe nicht erfüllt, fährt das Programm mit Schritt 670 fort und ermittelt, ob die errechneten Werte die Kriterien für eine hohe Stopphilfe erfüllen. Wenn die errechneten Werte die Anforderungen für eine hohe Stopphilfe erfüllen, erniedrigt der Algorithmus die Abstopprate in Schritt 680. Wenn die errechneten Werte die Anforderungen für eine hohe Abstopphilfe oder eine niedrige Abstopphilfe nicht erfüllen, wird die Rate für die Abstopphilfe nicht verändert. Die Anforderungen für die Rate der Abstopphilfe kann vom Hersteller des Helikoptermodells fest im Programm vorgegeben sein oder sind durch den Nutzer in der adaptiven Regelschleife programmierbar.

Figuren 7A bis 7C zeigen Beispiele für Kurven, die durch den Algorithmus in Schritt 640 erzeugt wurden. Der Schritt mit der Kurvenanalyse errechnet zwei Werte aus dem Kurvenverlauf des am kürzesten zurückliegenden Stoppversuchs: 1) Der erste Nulldurchgang der Signalgeschwindigkeit nach Loslassen des Steuerknüppels; und 2) den ersten Wechsel der Richtung der Signalgeschwindigkeit.

In Figuren 7A und 7B ist der erste Nulldurchgang der Signalgeschwindigkeit nach Loslassen des Knüppels mit 710 bezeichnet. Entsprechend ist der erste Richtungswechsel der Signalrate bei Loslassen des Knüppels mit 720 bezeichnet.

Fig. 7A zeigt einen repräsentativen Graph der Kurvenanalyse für eine Kurve, die ein Abstoppen mit Überschreitung zeigt (overshooting). Wenn keine Abstopphilfe vorliegt, kann die beabsichtigte Stoppkurve für den Antrieb diesem Graph entsprechen, welcher die Antriebsgeschwindigkeit absenkt, jedoch das Abstoppen bei der Nullrate nicht erreicht. Vielmehr überschreitet der Antrieb die Stoppposition und benötigt eine Eingabe der Regelschleife, um eine Kompensation in die Gegenrichtung durchzuführen. Verlässt man sich für die Korrektur der Überschreitung auf die Regelschleife, wird eine erheblich längere Zeit benötigt, als bei Einsatz eines Algorithmusses, wie in Schritt 600 gezeigt. Wenn diese Situation auftritt, wie durch die Algorithmen in Schritten 640 und 650 ermittelt, wird die Abstopprate in Schritt 690 erhöht, damit bei dem nächsten Abstoppen die Antwort auf eine Nutzereingabe mit einem Stoppereignis beschleunigt wird.

Umgekehrt zeigt Fig. 7B eine Situation, bei der die Abstopphilfe zu groß bemessen ist und das Stoppen zu früh ist (Unterschreitung). In diesem Fall erscheint der Wechsel der Signalgeschwindigkeit vor dem Nulldurchgang, was dazu führt, dass die Regelschleife eine zusätzliche Korrektur durchführen muss, um das gewünschte Resultat zu erhalten. Genauso wie bei dem Fall, wenn der Helikopter die Stoppposition überschreitet, ist die Korrektur des Unterschreitens durch die Reglerschleife erheblich langsamer, als die Korrektur des Unterschreitens mit einem Algorithmus, wie in Block 600 dargestellt. Für die hier beschriebene Situation ist die Stopphilferate zu reduzieren, wie in Schritt 680 dargestellt.

In Fig. 7C ist schließlich ein zufriedenstellendes Abstoppen gezeigt, bei dem durch den oben beschriebenen Abstopphilfealgorithmus sowohl der Richtungswechsel der Signalgeschwindigkeit als auch der Nulldurchgang genau zur selben Zeit stattfindet.

Unter Bezugnahme auf die Figuren 4 bis 6 können zusätzlich zu den oben beschriebenen Beispielen noch weitere Werte von einem Selbstlernalgorithmus errechnet oder optimiert werden, wie beispielsweise ein Verstärkungsfaktor des Heckreglers, den an die Fluggeschwindigkeit angepasst ist; Änderungen des Moments errechnet als Ausgang für den Heckaktuator (dynamische Momentenkompensation); Gierratenberechnung und Rotation des Koordinatensystems des Taumelscheibenalgorithmus (Piruettenoptimierung); und Heckschubberechnung und Ausgangssignal für die Taumelscheibe zur Kompensation jedes daraus resultierenden Effekts auf die zyklischen Achsen.

Auch wenn sich die Beispiele der vorliegenden Erfindung auf funkferngesteuerte Helikopter bzw. -modelle beziehen, ist die Erfindung nicht auf solche Modelle beschränkt.

## Patentansprüche

1. Modellflugkörpersteuer- und Empfangseinrichtung in einem Gehäuse (10) umfassend einen elektronischen, kreiselbasierten mehrachsigen programmierbaren Fluglagenregler (260), insbesondere Helikopterfluglagenregler, welcher Steuereingänge für mehrere Steuerkanäle sowie Eingänge für Kreiselsignale umfasst, **dadurch gekennzeichnet, dass** die Modellflugkörpersteuer- und Empfangseinrichtung zumindest einen Eingang (50, 52) für ein Empfangsmodul (20, 22) bereitstellt, das innerhalb oder außerhalb des Gehäuses (10) des Fluglagenreglers (260) angeordnet ist.

2. Modellflugkörpersteuer- und Empfangseinrichtung nach Anspruch 1, **dadurch gekennzeichnet, dass** der Eingang (50, 52) für das Empfangsmodul (20, 22) durch eine elektrische Leitungsverbindung mit einer verringerten Anzahl von Einzeladern (60, 252) gebildet ist, wobei mehrere Steuerkanäle auf einer oder mehreren Signalleitungen zusammengefasst sind.

3. Modellflugkörpersteuer- und Empfangseinrichtung nach Anspruch 1 oder 2, **dadurch gekennzeichnet, dass** das Empfangsmodul in einem separaten Gehäuse (20, 22) außerhalb des Gehäuses (10) mit dem Fluglagenregler angeordnet ist und die verringerten Kanalleitungen ausgangsseitig ausgibt (Satellitenempfänger).

4. Modellflugkörpersteuer- und Empfangseinrichtung nach mindestens einem der Ansprüche 1 bis 3, **dadurch gekennzeichnet, dass** das Empfangsmodul in dem Gehäuse (10) mit der Fluglagenregelung integriert ist.

5. Modellflugkörpersteuer- und Empfangseinrichtung nach mindestens einem der Ansprüche 1 bis 4, **dadurch gekennzeichnet, dass** das Empfangsmodul ein 2,4 GHz-Empfänger ist, der nach dem Frequenzspreizverfahren arbeitet, insbesondere mit einem redundanten Empfangsprinzip.

6. Modellflugkörpersteuer- und Empfangseinrichtung nach mindestens einem der Ansprüche 1 bis 5, **dadurch gekennzeichnet, dass** das Gehäuse (10) zumindest eine Buchse (50, 52) oder einen Anschluss für einen oder zwei oder mehrere Satellitenempfänger (20, 22) aufweist sowie mindestens vier Buchsen (70) für RC-Servos (272, 274, 276).

7. Modellflugkörpersteuer- und Empfangseinrichtung nach mindestens einem der Ansprüche 1 bis 5, **dadurch gekennzeichnet, dass** das Gehäuse eine Buchse oder einen Anschluss für eine Kreiseleinheit aufweist, wobei die Kreiseleinheit einen insbesondere zwei oder dreiachsigen Drehratensensor umfasst, und/oder die Drehratensensoren im Gehäuse des Helikopterfluglagenregler integriert sind.

8. Modellflugkörpersteuer- und Empfangseinrichtung nach mindestens einem der Ansprüche 1 bis 7, **dadurch gekennzeichnet, dass** das Gehäuse (10) eine Buchse (80) oder einen Anschluss für eine Programmierschnittstelle und/oder ein Display mit Eingabeschnittstelle zur Programmierung der Geräteparameter umfasst.

9. Modellflugkörpersteuer- und Empfangseinrichtung nach mindestens einem der Ansprüche 1 bis 8, **dadurch gekennzeichnet, dass** die Software für den Helikopterfluglagenregler (260) eine Selbstlernfunktion (360) aufweist, welche selbständig während des Flugs des Flugkörpers eine Einstellung von für die Fluglagenregelung notwendiger Trimmwerte und/oder sonstiger für die Fluglagenregelung notwendiger Einstellparameter ermittelt oder weiter optimiert.

10. Modellflugkörpersteuer- und Empfangseinrichtung nach mindestens einem der Ansprüche 1 bis 9, **dadurch gekennzeichnet, dass** der Helikopterfluglagenregler einen Heading-Hold-Regler (460) für die Modellhochachse umfasst, welcher eine Signalverbindung zum Regler für die Längs- und Querachse und/oder eine Signalverbindung zu den Steuereingängen umfasst, so dass der Heading-Hold-Regler auf Drehmomentschwankungen, die von Steuersignalen und/oder Regeleingriffen im Zusammenhang mit der Längs- und Querachse und/oder zyklischen Steuersignalen hervorgerufen werden, früher durch einen geeigneten Regeleingriff reagieren kann.

11. Verfahren, bei dem eine Regelung und Stabilisierung eines Modellhelikopters, mit einer Modellflugkörpersteuer- und Empfangseinrichtung gemäß mindestens einem der Ansprüche 1 bis 10, durchgeführt wird, **dadurch gekennzeichnet, dass** die Regelung eine Selbstlernfunktion (360) umfasst und/oder die Regelung eine Kopplung des Heckreglers (460) mit dem Taumelscheibenregler (450) umfasst und/oder die Regelung eine Stopphilfefunktion (600) umfasst.

## Claims

1. Model aircraft control and receiving device in a housing (10), comprising an electronic, gyroscopic multi-axis programmable flight attitude controller (260), preferably helicopter flight attitude controller, having control inputs for a plurality of control channels and inputs for gyroscope signals, **characterized in that** the model aircraft control and receiving device provides at least one input (50, 52) for a receiver module (20, 22) disposed inside or outside of the housing (10) of the flight attitude controller (260).

2. Model aircraft control and receiving device according claim 1, **characterized in that** the input (50, 52) for the receiver module (20, 22) is formed by an electrical line connection with a reduced number of single veins (60, 252), whereby a plurality of control channels are combined on one or more signal lines.

3. Model aircraft control and receiving device according claim 1 or 2, **characterized in that** the receiver module is located in a separate housing (20, 22) from said flight control unit (10) and said module puts out the reduced number of channel lines at an output (satellite receiver).

4. Model aircraft control and receiving device according at least one of the claims 1 to 3, **characterized in that** the receiver module is integrated into the same housing (10) as said flight control unit.

5. Model aircraft control and receiving device according at least one of the claims 1 to 4, **characterized in that** the receiver module is a 2.4 GHz-receiver, which operates according to the frequency spread method, particularly with a redundant receiving principle.

6. Model aircraft control and receiving device according at least one of the claims 1 to 5, **characterized in that** the housing (10) comprises at least one connector (50, 52) or a port for one or two or several satellite receiver (20, 22) and at least four ports (70) for RC-Servos (272, 274, 276).

7. Model aircraft control and receiving device according at least one of the claims 1 to 5, **characterized in that** the housing comprises a connector or a port for a gyroscope unit, wherein the gyroscope unit comprises a particularly bi- or tri-axial angular rate sensor, and/or the rate sensors are integrated in the housing of the helicopter flight attitude control.

8. Model aircraft control and receiving device according at least one of the claims 1 to 7, **characterized in that** the housing (10) comprises a connector (80) or a port for a programming interface and/or a display with an input interface for programming of parameters of the device.

9. Model aircraft control and receiving device according at least one of the claims 1 to 8, **characterized in that** the software for the helicopter flight attitude control (260) comprises a self-learning function (360) which autonomously determines or further optimizes trim values which are necessary for the flight attitude control and/or other adjustment parameters for the flight attitude control, whereby the optimization or determination is performed autonomous during flight of the aircraft.

10. Model aircraft control and receiving device according at least one of the claims 1 to 9, **characterized in that** the helicopter flight attitude control comprises a heading-hold controler (460) for the vertical axis of the model which comprises a signal connection to the controller for the longitudinal and transverse axis and/or a signal connection to the control inputs, so that the heading-hold controller can react earlier by a suitable controller intervention on torque variations which are from control signals and/or interventions of the controller in connection with the longitudinal and transverse axis and/or cyclic control signals.

11. Method wherein controlling and stabilizing a model helicopter is performed by a model aircraft control and receiving device according to at least one of the claims 1 to 10, **characterized in that** the control comprises a self-learning function (360) and/or the control comprises a coupling of the tail controller (460) to the swashplate controller (450) and/or the control comprises a stopping support function (600).

## Revendications

1. Dispositif de commande et de réception de modèle réduit d'aéronef, logé dans un boîtier (10), comprenant un correcteur d'assiette (260) électronique, programmable multiaxe, gyroscopique, en particulier un correcteur d'assiette d'hélicoptère, qui comprend des entrées de commande pour plusieurs canaux de commande ainsi que des entrées pour des signaux gyroscopiques, **caractérisé en ce que** le dispositif de commande et de réception de modèle réduit d'aéronef offre au moins une entrée (50, 52) pour un module de réception (20, 22) disposé à l'intérieur ou à l'extérieur du boîtier (10) du correcteur d'assiette (260).

2. Dispositif de commande et de réception de modèle réduit d'aéronef selon la revendication 1, **caractérisé en ce que** l'entrée (50, 52) pour le module de réception (20, 22) est formée par une liaison câblée électrique avec un nombre réduit de conducteurs individuels (60, 252), plusieurs canaux de commande étant réunis sur une ou plusieurs lignes de signalisation.

3. Dispositif de commande et de réception de modèle réduit d'aéronef selon la revendication 1 ou 2, **caractérisé en ce que** le module de réception est disposé dans un boîtier (20, 22) séparé à l'extérieur du boîtier (10) du correcteur d'assiette et **en ce que** les lignes de canal réduites sortent du côté de sortie (récepteur satellite).

4. Dispositif de commande et de réception de modèle réduit d'aéronef selon au moins l'une des revendications 1 à 3, **caractérisé en ce que** le module de réception est intégré dans le boîtier (10) du correcteur d'assiette.

5. Dispositif de commande et de réception de modèle réduit d'aéronef selon au moins l'une des revendications 1 à 4, **caractérisé en ce que** le module de réception est un récepteur 2,4 GHz fonctionnant selon la méthode d'écartement de fréquences, en particulier avec un principe de réception redondante.

6. Dispositif de commande et de réception de modèle réduit d'aéronef selon au moins l'une des revendications 1 à 5, **caractérisé en ce que** le boîtier (10) comprend au moins une prise femelle (50, 52) ou un raccord pour un ou deux ou plusieurs récepteurs satellites (20, 22) ainsi qu'au moins quatre prises femelles (70) pour des servos RC (272, 274, 276).

7. Dispositif de commande et de réception de modèle réduit d'aéronef selon au moins l'une des revendications 1 à 5, **caractérisé en ce que** le boîtier comprend une prise femelle ou un raccord pour une unité gyroscopique, l'unité gyroscopique comprenant un capteur du taux de rotation, en particulier un capteur à deux ou trois axes, et/ou les capteurs du taux de rotation étant intégrés dans le boîtier du correcteur d'assiette d'hélicoptère.

8. Dispositif de commande et de réception de modèle réduit d'aéronef selon au moins l'une des revendications 1 à 7, **caractérisé en ce que** le boîtier (10) comprend une prise femelle (80) ou un raccord pour une interface de programmation et/ou un display avec une interface d'entrée pour programmer les paramètres du dispositif.

9. Dispositif de commande et de réception de modèle réduit d'aéronef selon au moins l'une des revendications 1 à 8, **caractérisé en ce que** le logiciel pour le correcteur d'assiette d'hélicoptère (260) comprend une fonction d'apprentissage automatique (360) qui détermine ou optimise encore automatiquement, pendant le vol de l'aéronef, un réglage des valeurs de compensation d'assiette nécessaires pour la régulation d'assiette et/ou d'autres paramètres de réglage nécessaires pour la régulation d'assiette.

10. Dispositif de commande et de réception de modèle réduit d'aéronef selon au moins l'une des revendications 1 à 9, **caractérisé en ce que** le correcteur d'assiette d'hélicoptère comprend un régulateur heading-hold (460) pour l'axe vertical du modèle qui comprend une liaison de signal avec le régulateur pour l'axe longitudinal et l'axe transversal et/ou une liaison de signal avec les entrées de commande, de manière que le régulateur heading-hold puisse réagir plus tôt, par une intervention appropriée de régulation à des fluctuations du couple causées par des signaux de commande et/ou par des interventions de régulation en connexion avec l'axe longitudinal et l'axe transversal et/ou par des signaux de commande cycliques.

11. Procédé consistant à exécuter une régulation et une stabilisation d'un modèle réduit d'hélicoptère au moyen d'un dispositif de commande et de réception de modèle réduit d'aéronef selon au moins l'une des revendications 1 à 10, **caractérisé en ce que** la régulation comprend une fonction d'apprentissage automatique (360) et/ou la régulation comprend un couplage du régulateur arrière (460) au régulateur à plateau oscillant (450) et/ou la régulation comprend une fonction d'aide à l'arrêt (600).
